# EUROPEAN PATENT APPLICATION

(11) **EP 4 826 888 A1**
(43) Date of publication of application: **21.10.2026**
(21) Application number: 24902703.8
(22) Date of filing: 05.12.2024
(51) Int. Cl.: H01M 50/531, H01M 50/533, H01M 50/536

(54) **BATTERY CELL AND BATTERY**

(30) Priority: 11.12.2023 CN 202311699164
(71) Applicant: Ningde Amperex Technology Limited, Ningde, Fujian 352100 (CN)
(72) Inventor: ZHANG, Guowen, Ningde, Fujian 352100 (CN)
(74) Representative: Kraus & Lederer PartGmbB
(86) International application number: PCT/CN2024/137187
(87) International publication number: WO 2025/124282

(57) **Abstract**

A battery cell (10) and a battery are provided. The battery cell (10) includes a battery cell body. The battery cell body includes a body portion (100) and multiple groups of tab structures (200). Each tab structure (200) includes multiple tabs (210) arranged on a same side of the body portion (100) in a first direction of the battery cell (10), and each of the tabs (210) is connected to the body portion (100). Some of the tabs (210) of the tab structure (200) form a first tab group (201), and some other of the tabs (210) form a second tab group (202). The first tab group (201) and the second tab group (202) are bent toward each other respectively at a first bending region (210a) and a second bending region (210b) and are connected in a stacking manner, and the first bending region (210a) and the second bending region (210b) are spaced apart in a second direction perpendicular to the first direction. Bending stress of each of the first tab group (201) and the second tab group (202) is smaller, so that the space occupied by the tab structure (200) is small, thereby helping to increase the energy density of the battery. The first tab group (201) and the second tab group (202) are more stable, effectively reducing the occurrence of abnormalities such as damage and fracture of the tabs (210) at a joint of the first tab group (201) and the second tab group (202).

## Description

### TECHNICAL FIELD

This application relates to the field of battery technology, in particular to a battery cell and a battery.

### BACKGROUND

With the increasing demand for thinner and lighter electronic devices, controlling battery volume and improving battery energy density have become key research and development directions in the industry. Controlling battery cell volume and reducing space occupation proportion of a battery cell in a housing of the battery help to increase the battery energy density, which puts forward higher requirements on the structural design of the battery cell.

### SUMMARY

Some embodiments of this application provide a battery cell and a battery, which can solve the problem of how to improve a battery cell structure to increase battery energy density.

According to a first aspect, an embodiment of this application provides a battery cell, where the battery cell includes a battery cell body. The battery cell body includes: a body portion and a tab structure. The tab structure includes multiple tabs arranged on a same side of the body portion along a first direction of the battery cell, and each of the tabs is connected to the body portion;
where some of the tabs of the tab structure form a first tab group, and some other of the tabs form a second tab group; at least some of the tabs of the first tab group and at least some of the tabs of the second tab group extend from the body portion in directions away from each other, respectively; all the tabs of the first tab group at a first bending region and all the tabs of the second tab group at a second bending region are bent toward each other and are connected in a stacking manner; and the first bending region and the second bending region are spaced apart in a second direction perpendicular to the first direction.

Based on this embodiment of this application, the number of the first tab groups and the number of the second tab groups are smaller than the number of bent tabs in the entire tab structure in the prior art, so that bending stress of each of the first tab group and the second tab group is smaller, which helps to reduce the rebound degree of the first tab group and the second tab group, and reduce the space occupied by the tab structure.

In some exemplary embodiments, the tab includes a first segment connected to the body portion and a second segment connected to the first segment, one of the tabs of the first tab group is a first tab, a joint of the first segment and the second segment of the first tab is located at the first bending region, and the other tabs of the first tab group all extend to the first bending region and are then bent toward the second tab group; and
one of the tabs of the second tab group is a second tab; at least one tab is further provided between the second tab and the first tab; a joint of the first segment and the second segment of the second tab is located at the second bending region; the other tabs of the second tab group all extend to the second bending region and are then bent toward the first tab group; and the second segments of the tabs of the first tab group are connected to the second segments of the tabs of the second tab group in a stacking manner in the first direction of the battery cell.

Based on the above embodiments, the tabs of both the first tab group and the second tab group are bent in appropriate regions, and a spacing is provided between the two bending regions to prevent the bent tabs from extending beyond the body portion in the second direction of the battery cell due to an excessive width, thereby preventing the bent tabs from colliding with other structures.

In some exemplary embodiments, two adjacent tabs of the tab structure at least partially overlap in the second direction of the battery cell; and along the second direction, the tab structure includes a middle tab, the middle tab and multiple tabs located on one side of the middle tab in the second direction form the first tab group, and multiple tabs located on another side of the middle tab in the second direction form the second tab group.

Based on the above embodiments, by adopting the above bending method, two adjacent tabs can interact with each other after bending, improving the orderliness after the tabs are bent, preventing protrusion of some tabs caused by rebounding of some tabs due to large bending stress, improving the regularity of the appearance of the tab structure, and effectively improving the stability of the tab structure.

In some exemplary embodiments, in the second direction of the battery cell, a tab of the first tab group farthest from the middle tab forms the first tab; and/or, in the second direction of the battery cell, a tab of the second tab group farthest from the middle tab forms the second tab.

Based on the above embodiments, in such manner, more tabs can be bent, so that a larger interaction force is provided between the tabs of each tab structure, reducing the degree of freedom of the tab structure, and allowing for a larger stacked area after the first tab group and the second tab group are bent toward each other, thereby providing a larger area for interconnection.

In some exemplary embodiments, in the first direction, the second segments of the second tab group are connected to the second segments of the first tab group in a stacking manner on a side away from the body portion; or, all the second segments of the second tab group are inserted between the second segments of two adjacent tabs of the first tab group; or, all the second segments of the first tab group are inserted between the second segments of two adjacent tabs of the second tab group; or, one second segment of the first tab group is inserted between the second segments of two adjacent tabs of the second tab group.

Based on the above embodiments, the interaction force between the tabs of the first tab group and the tabs of the second tab group is increased, so that stacked portions of the first tab group and the second tab group are connected more stably.

In some exemplary embodiments, a length of the body portion in the second direction of the battery cell is A, a joint of the second segment and the first segment of the tab has a first boundary, and an end portion of the second segment away from the first segment has a second boundary; and
in the second direction, the second boundaries of all the tabs of the first tab group are spaced apart from the first boundaries of the tabs of the second tab group, with a spacing of L1, where L1 satisfies: 0.1 mm ≤ L1 ≤ A/2. L1 being less than 0.1 mm may cause excessive protrusion of an end portion of the second segment of the tab of the first tab group, leading to contact between the first tab group and other structures outside the battery cell. L1 being greater than A/2 results in a small welding area of the second segments of the two tab groups, affecting the welding strength.

In the second direction, the second boundaries of all the tabs of the second tab group are spaced apart from the first boundaries of the tabs of the first tab group, with a spacing of L2, where L2 satisfies: 0.1 mm ≤ L2 ≤ A/2.

Based on the above embodiments, the second segment of the first tab group is prevented from contacting the second tab group and stabbing the second tab group, and excessive protrusion of the end portion of the second segment of the tab of the second tab group is prevented, thereby preventing contact between the second tab group and other structures outside the battery cell. L2 being less than 0.1 mm may cause excessive protrusion of the end portion of the second segment of the tab of the second tab group, leading to contact between the second tab group and other structures outside the battery cell. L2 being greater than A/2 results in a small welding area of the second segments of the two tab groups, affecting the welding strength.

In some exemplary embodiments, in the second direction, a spacing between the second boundaries of two adjacent tabs of the first tab group is x1, where x1 satisfies: 0 mm ≤ x1 ≤ 0.5 mm; and/or, in the second direction, a spacing between the second boundaries of two adjacent tabs of the second tab group is x2, where x2 satisfies: 0 mm ≤ x2 ≤ 0.5 mm.

Based on the above embodiments, the end portion of the second segment of the first tab group is flush with or tends to be flush with the end portion of the second segment of the second tab group, to reduce the space occupied by the tab structure.

In some exemplary embodiments, the second segment of the first tab group has a first connection region, the second segment of the second tab group has a second connection region, and the second connection region is stacked with the first connection region in the first direction. The battery cell further includes a solder layer, and the solder layer covers the first connection region and the second connection region to electrically connect the first tab group and the second tab group.

Based on the above embodiments, welding is adopted to effectively connect the tabs of the first tab group and the tabs of the second tab group, with good connection stability.

In some exemplary embodiments, the tab has an inner surface, and the tab is bent toward a side where the inner surface is located. The inner surface of the tab includes a first surface, a part of the surface of the first segment forms the first surface, and the first surface is connected to the body portion. An included angle between the first surface of the middle tab and the second direction of the battery cell is β, where β satisfies: 5° ≤ β ≤ 45°.

Based on the above embodiments, regarding the included angle β between the first surface of the middle tab and the second direction of the battery cell, the included angle β of the middle tab is the smallest relative to the included angles β of other tabs, and controlling the included angle β of the middle tab to be within the above range helps to reduce a size of the tab structure in a length direction of the battery cell.

In some exemplary embodiments, the inner surface of the tab includes a second surface, and a part of the surface of the second segment forms the second surface. The inner surface of some of the tabs of the tab structure further includes a connection transition surface connected between the first surface and the second surface, and the connection transition surface is an arc surface; or, at least a part of the connection transition surface is planar, and an included angle between the planar part of the connection transition surface of the middle tab and the second surface is α, where α satisfies: 90° ≤ α ≤ 150°.

Based on the above embodiments, controlling the bending angle between the segments of the tab to be within the above range helps to reduce a volume of the tab structure and prevent fracture of the tab due to an excessively large bending angle.

In some exemplary embodiments, the number of the tabs of the first tab group is n1, and the number of the tabs of the second tab group is n2, where n1:n2 = 1:(1-5). Preferably, n1 and n2 satisfy: n1:n2 = 1:(1-1.2).

Based on the above embodiments, within the above ratio ranges, the number of the tabs of the first tab group and the number of the tabs of the second tab group are appropriately allocated, allowing for small bending stress of the tab structure formed after bending.

In some exemplary embodiments, the battery cell includes two groups of tab structures, where one group of the tab structures is a positive electrode tab structure, and the other group of the tab structures is a negative electrode tab structure. The positive electrode tab structure and the negative electrode tab structure are arranged on a same side of the body portion.

According to a second aspect, an embodiment of this application provides a battery, where the battery includes a housing and the battery cell as described above, and the battery cell is arranged in an internal space of the housing.

Based on the battery cell and the battery of some embodiments of this application, the multiple tabs of the tab structure are divided into two tab groups which are the first tab group and the second tab group, and are bent toward each other and then connected in a stacking manner, and the number of the first tab groups and the number of the second tab groups are smaller than the number of bent tabs in the entire tab structure in the prior art, so that bending stress of each of the first tab group and the second tab group is smaller, which helps to reduce the rebound degree of the first tab group and the second tab group, and reduce the space occupied by the tab structure, thereby increasing the energy density of the battery when the battery cell is applied to the battery. After the bending stress of both the first tab group and the second tab group is reduced, the stress at the joint of the first tab group and the second tab group is reduced as well, the joint thereof is more stable, effectively reducing the occurrence of abnormalities such as damage and fracture of the tabs at the joint of the first tab group and the second tab group.

### BRIEF DESCRIPTION OF DRAWINGS

To more clearly illustrate some embodiments of this application or the technical solutions in the prior art, the drawings required for use in the description of some embodiments or the prior art are briefly described below. Apparently, the drawings in the following description are only some embodiments of this application, and for those skilled in the art, other drawings can be obtained according to these drawings without creative efforts.
FIG. 1 is a schematic three-dimensional structural diagram of a battery cell according to an embodiment of this application;
FIG. 2 is a schematic partial cross-sectional view of a battery cell according to an embodiment of this application;
FIG. 3 is a schematic front structural view of an unfolded electrode plate according to an embodiment of this application;
FIG. 4 is a schematic partial cross-sectional view of a battery cell according to another embodiment of this application;
FIG. 5 is a schematic partial cross-sectional view of a battery cell with dimensions marked according to an embodiment of this application;
FIG. 6 is a schematic partial cross-sectional view of a battery cell with multiple tabs concentrated and bent in one place in the related art;
FIG. 7 is a schematic partial cross-sectional view of a second tab group inserted into a first tab group according to an embodiment of this application;
FIG. 8 is a schematic partial cross-sectional view of a second tab group and a first tab group inserted into each other according to an embodiment of this application; and
FIG. 9 is a schematic side view of a tab structure according to an embodiment of this application.

### Reference signs:

10. battery cell; 100. body portion;
200. tab structure; 201. first tab group; 202. second tab group; 210. tab; 211. first segment; 212. second segment; 2101. first boundary; 2102. second boundary; 2111. first connection region; 2112. second connection region; 203. middle tab; 204. first tab; 205. second tab; 210a. first bending region; 210b. second bending region; 2011. connection transition surface; 2013. first surface; 2014. second surface;
X. first direction; Y. second direction; Z. third direction;
220. separator; 230. solder layer; 240. electrode plate; 241. first part; 242. second part;
410. positive electrode tab structure; and 420. negative electrode tab structure.

### DETAILED DESCRIPTION OF EMBODIMENTS

To make the objectives, technical solutions, and advantages of this application clearer, this application will be further described in detail below in conjunction with the accompanying drawings and some embodiments. It should be understood that the specific embodiments described herein are only used to explain this application and are not intended to limit this application.

The inventors have found that bending and stacking the tabs at the head of the battery cell to improve the orderliness of the tabs can increase the space utilization rate and reduce the space occupied by the battery cell inside the battery, but the tabs rebound due to bending stress, making it difficult to achieve a good effect in reducing the battery cell volume, and making it difficult to put the battery cell into the housing of the battery. In addition, after multiple layers of tabs are bent, the multiple layers of tabs are connected through welding or the like, and welding positions also occupy space, together with the multiple layers of tabs that are bent, resulting in a large head size of the battery cell, and limiting further reduction of the head size of the battery cell. The inventors also have found that the bent tabs have large stress at the edges and nearby of the welding positions, which is likely to cause the problem of tab fracture near the welding positions. Based on this, an embodiment of this application provides a battery cell and a battery.

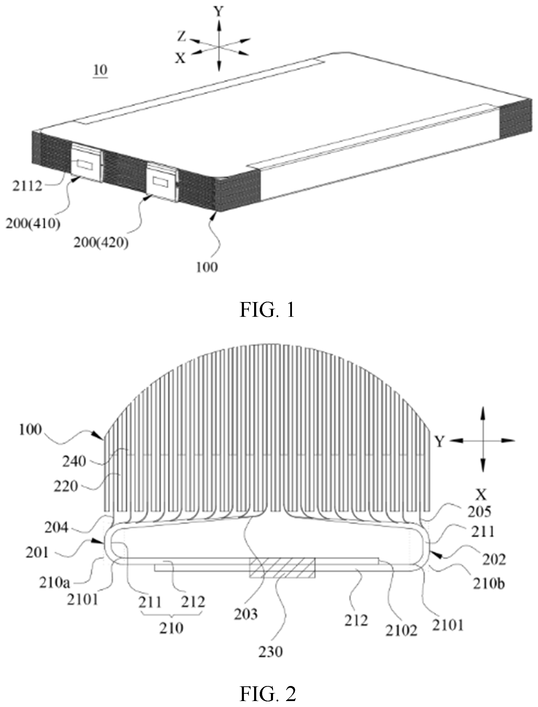

FIG. 1 is a schematic structural diagram of a battery cell 10 according to an embodiment of this application. The battery cell 10 includes a battery cell body, and the battery cell body includes a body portion 100 and multiple groups of tab structures 200. As shown in FIG. 2, the battery cell 10 includes multiple electrode plates 240 and separators 220, the body portion 100 is formed by at least some of the separators 220 and electrode plates 240, and the tab structures 200 are arranged on the electrode plates 240 or formed by some of the electrode plates 240.

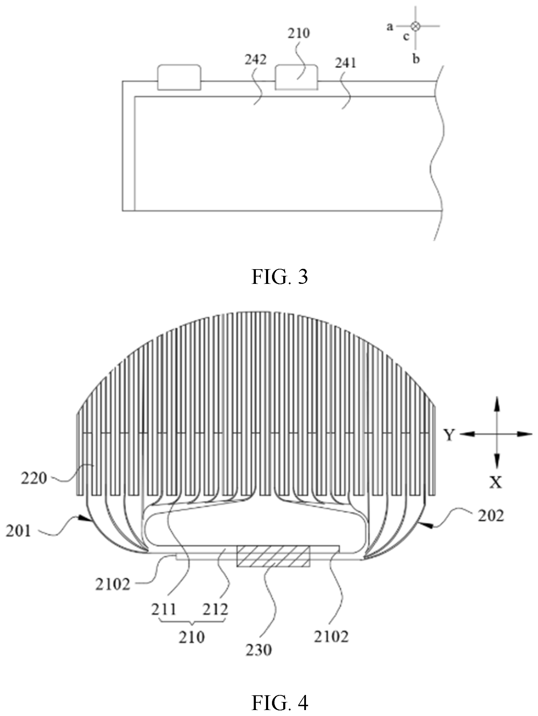

Specifically, FIG. 3 is a schematic structural view of an unfolded electrode plate 240 according to an embodiment of this application. In an unfolded state, the electrode plate 240 has a length direction, a width direction, and a thickness direction that are perpendicular to each other. Each electrode plate 240 has a first part 241 and a second part 242. The first part 241 is formed by a part of a current collector and an active material layer arranged on a surface of the current collector in the thickness direction of the electrode plate 240. The second part 242 is formed by another part of the current collector, and is located in an edge region of the electrode plate 240 in the width direction of the electrode plate 240, and the current collector of the second part 242 and the current collector of the first part 241 are integrally formed. The separator 220 is arranged between two electrode plates 240 with opposite polarities in the thickness direction of the electrode plate 240, separating the two electrode plates 240 with opposite polarities. The two electrode plates 240 and the separator 220 arranged between the two electrode plates 240 can be wound multiple turns along the length direction of the electrode plate 240 to form a wound battery cell body, or the electrode plates 240 and the separator 220 can be alternately stacked along the thickness direction of the electrode plate 240 to form a stacked battery cell body. The electrode plates 240 and the separator 220 form the body portion 100, and the tab structures 200 are installed on the second parts 242 of the electrode plates 240, or the first parts 241 of the electrode plates 240 and the separators 220 form the body portion 100, and the second parts 242 of the electrode plates 240 form the tab structures 200.

When the battery cell body is a wound battery cell body, each turn of the electrode plate 240 of the battery cell body is approximately racetrack-shaped. Specifically, each turn of the electrode plate 240 includes two straight portions arranged oppositely and two corner portions arranged oppositely, and the two corner portions are respectively connected to two opposite ends of the two straight portions. The tab structure 200 is arranged on the electrode plate 240 corresponding to the straight portion.

Each tab structure 200 includes multiple tabs 210 arranged on a same side of the body portion 100 in a first direction X of the battery cell 10, and each tab 210 is connected to the body portion 100. Specifically, each tab 210 is installed on the body portion 100, or each tab 210 is integrally formed with the body portion 100.

In this embodiment of this application, a head size of the battery cell 10 can be reduced by bending the tabs 210. It can be understood that each tab 210 has bending stress after bending, causing the tab 210 to easily rebound. When the number of the tabs 210 is larger, after the multiple tabs 210 are bent, the overall rebound stress of the bent tab group is more significant due to the interaction of the bending stress between the tabs 210. In particular, outer tabs 210 rebound due to their own bending stress, and inner tabs 210 also act on the outer tabs 210 due to stress rebound, which further aggravates the rebound of the outer tabs 210. This not only causes the tabs 210 of the tab group to occupy a large space after bending, but also causes stress at the joint of the tabs 210 due to the bending stress, leading to unstable connection, or even easily causes abnormalities such as damage and fracture at the joint of the tabs 210, thereby affecting the safety of the battery cell 10. In addition, the bending stress is likely to cause unstable fitting between the two adjacent bent tabs 210, making it difficult to align and connect the multiple tabs 210.

As shown in FIG. 2, in this application, some of the tabs 210 of the tab structure 200 are configured to form a first tab group 201, some other of the tabs 210 are configured to form a second tab group 202, at least some of the tabs 210 of the first tab group 201 and at least some of the tabs 210 of the second tab group 202 extend from the body portion 100 in directions away from each other, respectively, and all the tabs 210 of the first tab group 201 at a first bending region 210a and all the tabs 210 of the second tab group 202 at a second bending region 210b are bent toward each other and are connected in a stacking manner. The first bending region 210a and the second bending region 210b are spaced apart in a second direction Y perpendicular to the first direction X.

In this embodiment of this application, the first tab group 201 and the second tab group 202 can be electrically connected at a stacking position, with a large stacking area, which contributes to electrical connection stability between the first tab group 201 and the second tab group 202. The multiple tabs 210 of the tab structure 200 are divided into two tab groups which are the first tab group 201 and the second tab group 202, and are bent toward each other and then connected in a stacking manner, and the number of the first tab groups 201 and the number of the second tab groups 202 are smaller than the number of the tabs 210 in the entire tab structure 200, so that the bending stress of each of the first tab group 201 and the second tab group 202 is smaller, which helps to reduce the rebound degree of the first tab group 201 and the second tab group 202, and reduce the space occupied by the tab structure 200, thereby increasing the energy density of the battery when the battery cell 10 is applied to the battery. After the bending stress of both the first tab group 201 and the second tab group 202 is reduced, the stress at the joint of the first tab group 201 and the second tab group 202 is reduced as well, and the joint thereof is more stable, effectively reducing the occurrence of abnormalities such as damage and fracture of the tabs 210 at the joint of the first tab group 201 and the second tab group 202.

Each tab 210 includes a first segment 211 and a second segment 212 that are integrally formed, the first segment 211 is connected to the body portion 100, and the second segment 212 is connected to an end of the first segment 211 away from the body portion 100. Each tab 210 is bent at a joint of the first segment 211 and the second segment 212, that is, the joint of the first segment 211 and the second segment 212 of the first tab group 201 is located at a first bending region 210a, and the joint of the first segment 211 and the second segment 212 of the second tab group 202 is located at a second bending region 210b. The second segments 212 of the tabs 210 of the first tab group 201 are connected to the second segments 212 of the tabs 210 of the second tab group 202 in a stacking manner in the first direction X of the battery cell 20.

As shown in FIG. 2, one of the tabs 210 of the first tab group 201 is a first tab 204, the joint of the first segment 211 and the second segment 212 of the first tab 204 is located at the first bending region 210a, the second segment 212 of the first tab 204 is bent at the first bending region 210a toward a side where the second tab group 202 is located, and the other tabs 210 of the first tab group 201 all extend to the first bending region 210a and are then bent toward the second tab group 202. The first bending region 210a includes the joint of the first segment 211 and the second segment 212 of the first tab 204 and a region near the connection, all the tabs 210 of the first tab group 201 are concentrated and bent at the first bending region 210a, and two adjacent tabs 210 within the first bending region 210a are arranged in contact with each other.

One of the tabs 210 of the second tab group 202 is a second tab 205, the joint of the first segment 211 and the second segment 212 of the second tab 205 is located at the second bending region 210b, the second segment 212 of the second tab 205 is bent at the second bending region 210b toward a side where the first bending region 210a is located, and the other tabs 210 of the second tab group 202 all extend to the second bending region 210b and are then bent toward the first tab group 201. Similarly, the second bending region 210b includes the joint of the first segment 211 and the second segment 212 of the second tab 205 and a region near the connection, all the tabs 210 of the second tab group 202 are concentrated and bent at the second bending region 210b, and two adjacent tabs 210 within the second bending region 210b are arranged in contact with each other.

Optionally, the first segment 211 of the first tab 204 extends along the first direction X of the battery cell 10, the second segment 212 extends along the second direction Y of the battery cell 10 toward a side where the second tab group 202 is located, the first segment 211 of the second tab 205 extends along the first direction X of the battery cell 10, the second segment 212 extends along the second direction Y of the battery cell 10 toward a side where the first tab group 201 is located, and at least one tab 210 is provided between the second tab 205 and the first tab 204. This facilitates selection of an appropriate bending position, which allows for an appropriate spacing between the first bending region 210a and the second bending region 210b in the second direction Y of the battery cell 10, providing an appropriate stacked connection area between the second segments 212 of the tabs 210 of the first tab group 201 and the second segments 212 of the tabs 210 of the second tab group 202 in the first direction X of the battery cell 10, thereby improving the connection stability.

Optionally, two adjacent tabs 210 of the tab structure 200 at least partially overlap in the second direction Y of the battery cell 10, and after the tabs 210 are bent, more stable electrical connection between the two adjacent tabs 210 is achieved. Preferably, the two adjacent tabs 210 of the tab structure 200 have equal widths in a third direction Z of the battery cell 10, where the first direction X, the second direction Y, and the third direction Z are perpendicular to each other. After the tabs 210 are bent, the two adjacent tabs 210 of the tab structure 200 overlap in the second direction Y of the battery cell 10, which helps to further improve the electrical connection stability between the two adjacent tabs 210 of the tab structure 200, and allows each tab structure 200 to occupy a small space in the third direction Z of the battery cell 10, with a large spacing between two adjacent groups of tab structures 200, thereby preventing contact between two adjacent groups of tabs 210.

The tab structure 200 includes a middle tab 203, the middle tab 203 and multiple tabs 210 located on one side of the middle tab 203 in the second direction Y form the first tab group 201, and multiple tabs 210 located on another side of the middle tab 203 in the second direction Y form the second tab group 202. This helps to orderly group the multiple tabs 210 of the tab structure 200, reducing an interaction force between the tabs 210, thereby reducing rebound stress of the tab structure 200.

As shown in FIG. 2 and FIG. 4, one of the tabs 210 of the first tab group 201 located on a side of the middle tab 203 away from the second tab group 202 forms the first tab 204. For example, in the second direction Y of the battery cell 10, the tab 210 of the first tab group 201 farthest from the middle tab 203 forms the first tab 204, or the tab 210 of the first tab group 201 which is the second farthest from the middle tab 203 forms the first tab 204.

One of the tabs 210 of the second tab group 202 located on a side of the middle tab 203 away from the first tab group 201 forms the second tab 205. For example, in the second direction Y of the battery cell 10, the tab 210 of the second tab group 202 farthest from the middle tab 203 forms the second tab 205, or the tab 210 of the second tab group 202 which is the second farthest from the middle tab 203 forms the second tab 205.

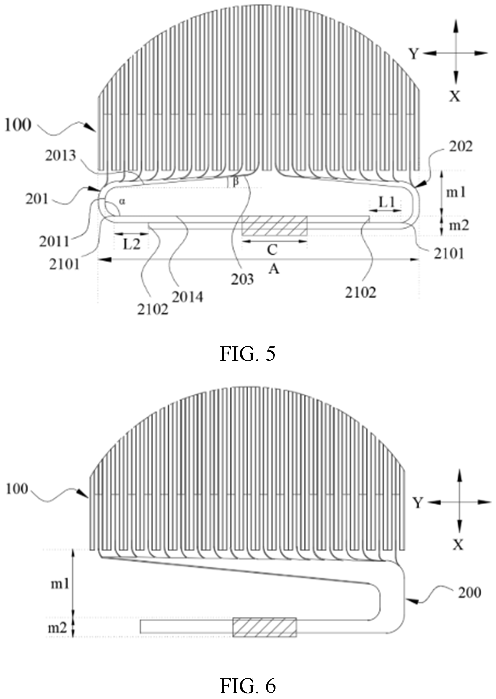

The tab 210 has an inner surface, and each tab 210 is bent toward a side where the inner surface is located. As shown in FIG. 5, the inner surface of the tab 210 includes a first surface 2013 and a second surface 2014, a part of the surface of the first segment 211 forms the first surface 2013, and the first surface 2013 is connected to the body portion. An included angle between the first surface 2013 of the middle tab 203 and the second direction Y of the battery cell 10 is β. Specifically, at least a part of the first surface 2013 of the middle tab 203 is planar, and the included angle β is an included angle between the planar part of the first surface 2013 of the middle tab 203 and the second direction Y of the battery cell 10, where β satisfies: 5° ≤ β ≤ 45°. It can be understood that, regarding an included angle between the first surface 2013 and the second surface 2014 of each tab 210 in the tab structure 200, the included angle β of the middle tab 203 is the smallest relative to the included angles of other tabs 210, and controlling the included angle β of the middle tab 203 to be within the above range helps to reduce a size of the tab structure 200 in the first direction X of the battery cell 10.

The inner surface of the tab 210 further includes a second surface 2014, and a part of the surface of the second segment 212 forms the second surface 2014. The inner surface of some of the tabs 210 of the tab structure 200 further includes a connection transition surface 2011 connected between the first surface 2013 and the second surface 2014, a part of the surface of the first segment 211 forms the connection transition surface 2011, and the first surface 2013 of some other tabs 210 of the tab structure 200 is directly connected to the second surface 2014.

Optionally, the connection transition surface 2011 is an arc surface. In this case, a thickness of the tab structure 200 in the first direction X of the battery cell 10 is affected by the included angle β of the middle tab 203, and a smaller included angle β indicates a smaller thickness of the tab structure 200 in the first direction X of the battery cell 10. Optionally, at least a part of the connection transition surface 2011 is planar. In this case, it is convenient to adjust a spacing between the first surface 2013 and the second surface 2014 of the middle tab 203 in the first direction X of the battery cell 10, facilitating cooperation with other structural members to meet installation requirements of other structural members. An included angle between the planar part of the connection transition surface 2011 of the middle tab 203 and the second surface 2014 is α. Specifically, at least a part of the second surface 2014 of the middle tab 203 is planar, and the included angle α is an included angle between the planar part of the second surface 2014 of the middle tab 203 and the planar part of the connection transition surface 2011, where α satisfies: 90° ≤ α ≤ 150°. It can be understood that, when the number of bent tabs 210 in a single tab 210 group is larger, the tabs 210 rebound to a greater degree due to the bending stress. Therefore, controlling the included angle α to be within a smaller range results in a better effect of the tab structure 200 in resisting rebound stress, and preferably, α satisfies: 90° ≤ α ≤ 110°, which makes the tab structure 200 more compact, reducing the degree of freedom of the tab structure 200. More preferably, α is 90°, and in this case, the planar part of the connection transition surface 2011 of the middle tab 203 is parallel to the first direction X of the battery cell 10.

The above is an introduction to the middle tab 203 in the tab structure 200, and included angles between the first surfaces 2013 of other tabs 210 of each tab structure 200 and the second direction Y of the battery cell 10 are all greater than β. In addition, some of the other tabs 210 of each tab structure 200 may have a connection transition surface 2011, or may not have a connection transition surface 2011. For example, as shown in FIG. 4, if an included angle between the first surface 2013 and the second surface 2014 of the outermost tab 210 of the tab structure 200 is greater than 90°, the first surface 2013 and the second surface 2014 of the tab 210 are directly connected; and if an included angle between the first surface 2013 and the second surface 2014 of the tab 210 adjacent to the middle tab 203 is less than 90°, the first surface 2013 and the second surface 2014 of the tab 210 are connected through the connection transition surface 2011, and an included angle between the planar part of the connection transition surface 2011 and the second surface 2014 is greater than or equal to α.

The battery cell 10 further includes a solder layer 230, and the solder layer 230 is arranged at a stacking position of the second segment 212 of the first tab group 201 and the second segment 212 of the second tab group 202 to weld and fix the second segment 212 of the first tab group 201 and the second segment 212 of the second tab group 202.

As shown in FIG. 5, a thickness of the tab structure 200 in the first direction X of the battery cell 10 is equal to a first thickness m1 plus a second thickness m2, where the first thickness m1 is a thickness of a stacked portion of the tab 210 connected to the body portion 100 (that is, the first segment 211 of the tab 210), and the second thickness m2 is a thickness of stacked portions of multiple tabs 210 away from the body portion 100 (that are, the second segments 212 of the tabs 210) plus a thickness of the solder layer 230. It can be understood that, in the solution of this application and a solution shown in FIG. 6 where all the tabs 210 are concentrated and bent in a same region and then welded, the second thicknesses m2 in the two solutions are equal, and the solution of this application differs in that the first thickness m1 is different, and the first thickness m1 in the solution of this application is smaller as compared to the solution where all the tabs 210 are concentrated and bent in a same region and then welded.

Specifically, a thickness of a single tab 210 is denoted as g, the number of the tabs 210 in the first tab group 201 is denoted as n1, and the number of the tabs 210 in the second tab group 202 is denoted as n2, so that a total number of the tabs 210 in the tab structure 200 is n1+n2. In the solution where all the tabs 210 are concentrated and bent in a same region and then welded, the second thickness m2 of the tab structure 200 is denoted as (n1+n2)g. In this embodiment of this application, a thickness of the stacked tabs 210 of the first tab group 201 is denoted as n1*g, and a thickness of the stacked tabs 210 of the second tab group 202 is denoted as n2*g. Since the first segments 211 of the tabs 210 of the first tab group 201 are separated from the first segments 211 of the tabs 210 of the second tab group 202, and under a condition that the tab 210 of the first tab group 201 farthest from the middle tab 203 forms the first tab 204, and the tab 210 of the second tab group 202 farthest from the middle tab 203 forms the second tab 205, the second thickness m2 of the tab structure 200 in this application is the larger one of n1*g and n2*g; and if n1 < n2, the second thickness m2 of the tab structure 200 in this application is n2*g. Thus, it can be seen that, as compared with the solution where all the tabs 210 are concentrated and bent in a same region and then welded, a reduced thickness of the tab structure 200 in the solution of this application is W, where W = (n1 + n2)g - n2*g = n1*g. When the tabs 210 closer to the middle tab 203 are selected as the first tab 204 and the second tab 205, the reduced thickness of the tab structure 200 in this embodiment of this application may be less than n1*g. Therefore, by dividing the multiple tabs 210 of the tab structure 200 into the first tab group 201 and the second tab group 202, this application can not only reduce a size of the tab structure 200 by reducing bending stress, but also reduce the thickness of the tabs 210 in terms of a stacked thickness of the multiple tabs 210, thereby truly achieving optimizing the tab structure 200 to increase the energy density of the battery when the battery cell 10 is applied to the battery.

Optionally, the number n1 of the tabs 210 in the first tab group 201 and the number n2 of the tabs 210 in the second tab group 202 satisfy: n1:n2 = 1:(1-5). The number of the tabs 210 of the first tab group 201 and the number of the tabs 210 of the second tab group 202 are allocated according to this ratio, so that the first tab group 201 and the second tab group 202 are compact in structure after bending, preventing rebound caused by excessive bending stress due to an excessively large number of the tabs 210 in the first tab group 201 or the second tab group 202. Preferably, n1:n2 = 1:(1-1.2).

The number of the tabs 210 in the second tab group 202 is greater than the number of the tabs 210 in the first tab group 201. Optionally, as shown in FIG. 2, in the first direction X, the second segments 212 of the second tab groups 202 are connected to the second segments 212 of the first tab group 201 in a stacking manner on a side away from the body portion 100. The second tab group 202 with a larger number of tabs 210 is selected to be on an outer layer of the first tab group 201, which helps to fully utilize a space between the body portion 100 and the outermost tab 210, so that the tab structure 200 is more compact in structure.

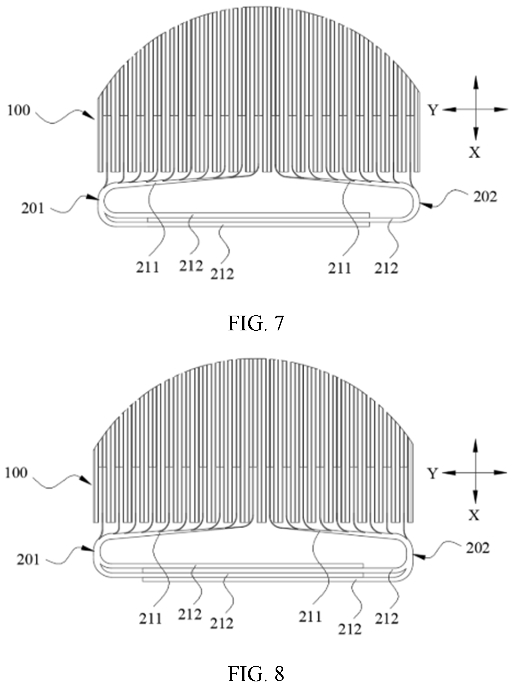

Optionally, as shown in FIG. 7, all the second segments 212 of the second tab group 202 are inserted between the second segments 212 of two adjacent tabs 210 of the first tab group 201; or, all the second segments 212 of the first tab group 201 are inserted between the second segments 212 of two adjacent tabs 210 of the second tab group 202; or, as shown in FIG. 8, one second segment 212 of the first tab group 201 is inserted between the second segments 212 of two adjacent tabs 210 of the second tab group 202. Adopting the insertion connection method as described above helps to increase a contact area between the tabs 210 of the first tab group 201 and the second tab group 202, improving the connection stability between the first tab group 201 and the second tab group 202. In addition, the tabs 210 can also interact with each other after being inserted into each other, preventing a single electrode plate 240 from being damaged due to the bending stress.

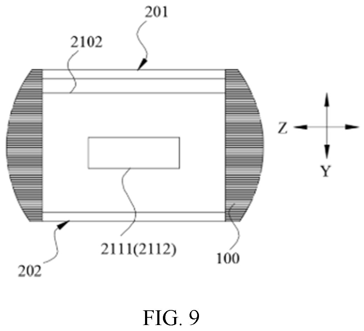

As shown in FIG. 9, the second segment 212 of the first tab group 201 has a first connection region 2111, the second segment 212 of the second tab group 202 has a second connection region 2112, and the second connection region 2112 overlaps with and is electrically connected to the first connection region 2111 in the first direction X of the battery cell 10, where a projection of the solder layer 230 in the first direction X of the battery cell 10 can also cover the second connection region 2112 and the first connection region 2111.

Optionally, the first connection region 2111 of the first tab group 201 is located at an end of the second segment 212 away from the first segment 211, or the first connection region 2111 of the first tab group 201 is located in a middle region of the second segment 212. The second connection region 2112 of the second tab group 202 is located at an end of the second segment 212 away from the first segment 211, or the second connection region 2112 of the second tab group 202 is located in a middle region of the second segment 212. The above is only an exemplary introduction, and an electrical connection position between the second segment 212 of the first tab group 201 and the second segment 212 of the second tab group 202 is not limited in this embodiment of this application, which may be selected according to actual needs.

Still referring to FIG. 5, a joint of the second segment 212 of the tab 210 and the first segment 211 has a first boundary 2101, an end portion of the second segment 212 away from the first segment 211 has a second boundary 2102, and the first boundary 2101 of each tab 210 is a position where the tab 210 is bent. In a direction away from the body portion 100, the second segment 212 of the first tab group 201 has a first inner surface facing the body portion 100 and a first outer surface facing away from the body portion 100, and the second segment 212 of the second tab group 202 is connected to the first outer surface in a stacking manner. In addition, the second segments 212 of the tabs 210 of the first tab group 201 are connected in a stacking manner, and the second segments 212 of the tabs 210 of the second tab group 202 are also connected in a stacking manner.

As shown in FIG. 5, in the second direction Y of the battery cell 10, the second boundaries 2102 of all the tabs 210 of the first tab group 201 are spaced apart from the first boundaries 2101 of the tabs 210 of the second tab group 202, with a spacing of L1, a length of the body portion 100 in the second direction Y of the battery cell 10 is A, and L1 satisfies: 0.1 mm ≤ L1 ≤ A/2, so that a spacing between the second boundary 2102 of the first tab group 201 and a bending position of the second tab group 202 is appropriate, preventing the second segment 212 of the first tab group 201 from squeezing the tabs 210 of the second tab group 202 in abnormal situations such as drop and squeezing. L1 being less than 0.1 mm may cause excessive protrusion of an end portion of the second segment of the tab of the first tab group, resulting in contact between the first tab group and other structures outside the battery cell. L1 being greater than A/2 results in a small welding area of the second segments of the two tab groups, affecting the welding strength.

In the second direction Y of the battery cell 10, the second boundaries 2102 of all the tabs 210 of the second tab group 202 are spaced apart from the first boundaries 2101 of the tabs 210 of the first tab group 201, with a spacing of L2, where L2 satisfies: 0.1 mm ≤ L2 ≤ A/2, so that a length of the second segment 212 of the tab 210 of the second tab group 202 is appropriate, preventing the second segment 212 of the tab 210 of the second tab group 202 from abutting against other structures such as a packaging bag of a battery in abnormal situations such as drop and squeezing, thereby preventing occurrence of deformation, fracture, and the like of the tab 210 of the second tab group 202 due to squeezing. L2 being less than 0.1 mm may cause excessive protrusion of an end portion of the second segment of the tab of the second tab group, resulting in contact between the second tab group and other structures outside the battery cell. L2 being greater than A/2 results in a small welding area of the second segments of the two tab groups, affecting the welding strength.

In addition, L1 satisfies: 0.1 mm ≤ L1 ≤ A/2, and L2 satisfies: 0.1 mm ≤ L2 ≤ A/2, which also facilitates an appropriate area for stacked connection between the second segment 212 of the first tab group 201 and the second segment 212 of the second tab group 202, with good connection stability. Further, sizes of the first connection region 2111 and the second connection region 2112 in the second direction Y of the battery cell 10 are equal, and denoted as C, where C satisfies: 2 mm ≤ C ≤ A/2.

In this embodiment of this application, the second boundaries 2102 of the second segments 212 of the tabs 210 of the first tab group 201 are configured to be flush with or approximately flush with each other, and the second boundaries 2102 of the second segments 212 of the tabs 210 of the second tab group 202 are configured to be flush with or approximately flush with each other, preventing end portions of some tabs 210 from protruding and colliding with other structures. Optionally, in the second direction Y of the battery cell 10, a spacing between the second boundaries 2102 of two adjacent tabs 210 of the first tab group 201 is x1, where x1 satisfies: 0 mm ≤ x1 ≤ 0.5 mm. In the second direction Y of the battery cell 10, a spacing between the second boundaries 2102 of two adjacent tabs 210 of the second tab group 202 is x2, where x2 satisfies: 0 mm ≤ x2 ≤ 0.5 mm.

The battery cell 10 in this embodiment of this application includes two types of tab structures 200 with opposite polarities, where one type of tab structure 200 is a positive electrode tab structure 410, and the other type of tab structure 200 is a negative electrode tab structure 420, where there is at least one positive electrode tab structure 410 and at least one negative electrode tab structure 420. Multiple groups of tab structures 200 arranged on a same side of the body portion 100 are arranged side by side and spaced apart in the third direction Z of the battery cell 10.

In the first direction X of the battery cell 10, the positive electrode tab structure 410 and the negative electrode tab structure 420 may be arranged on the same side of the body portion 100; or, the positive electrode tab structure 410 is arranged on one side of the body portion 100, and the negative electrode tab structure 420 is arranged on another side of the body portion 100. Optionally, when there are multiple positive electrode tab structures 410 and multiple negative electrode tab structures 420, the multiple positive electrode tab structures 410 and the multiple negative electrode tab structures 420 may all be arranged on the same side of the body portion 100, and arranged side by side and spaced apart along the third direction Z of the battery cell 10.

An embodiment of this application further provides a battery, where the battery includes a housing and the battery cell 10 as described above, the housing has an accommodation space, and a battery cell body of the battery cell 10 is accommodated in the accommodation space of the housing. The battery further includes an electrolyte, and the electrolyte fills the accommodation space of the housing and infiltrates the battery cell body.

The housing further has an electrode opening communicating with the accommodation space, and the battery may further include an electrode lead and a pole, where one end of the electrode lead is electrically connected to one tab structure 200, and another end is connected to the pole. The pole is arranged at the electrode opening and fixed to the housing, and at least a part of the pole extends out of the housing and is configured to be electrically connected to an external circuit.

Types of the housing, electrode lead, pole, electrolyte, electrode plate 240, and separator 220 are all not limited in this embodiment of this application, and any of the above substances suitable for batteries in the art are applicable to this application, which may be specifically selected according to actual needs.

In the drawings of this embodiment, the same or similar reference numerals correspond to the same or similar components. In the description of this application, it should be understood that if terms "upper", "lower", "left", "right", and the like indicate orientations or positional relationships based on orientations or positional relationships shown in the drawings, it is only for convenience of describing this application and simplifying the description, rather than indicating or implying that an apparatus or element referred to must have a specific orientation or be constructed and operated in a specific orientation, so terms describing positional relationships in the drawings are only for exemplary illustration and cannot be understood as limiting this patent. For those of ordinary skill in the art, specific meanings of the above terms can be understood according to specific situations.

The above descriptions are only preferred embodiments of this application and are not intended to limit this application. Any modifications, equivalent replacements, improvements, and the like made within the spirit and principles of this application should be included in the protection scope of this application.

## Claims

1. A battery cell, wherein the battery cell comprises a battery cell body, and the battery cell body comprises:
a body portion; and
a tab structure, wherein the tab structure comprises multiple tabs arranged on a same side of the body portion along a first direction of the battery cell, and each of the tabs is connected to the body portion;
wherein some of the tabs form a first tab group, and some other of the tabs form a second tab group; at least some of the tabs of the first tab group and at least some of the tabs of the second tab group extend from the body portion in directions away from each other, respectively; all the tabs of the first tab group at a first bending region and all the tabs of the second tab group at a second bending region are bent toward each other and are connected in a stacking manner; and the first bending region and the second bending region are spaced apart in a second direction perpendicular to the first direction.

2. The battery cell according to claim 1, wherein the tab comprises a first segment connected to the body portion and a second segment connected to the first segment;
one of the tabs of the first tab group is a first tab, a joint of the first segment and the second segment of the first tab is located at the first bending region, and the other tabs of the first tab group all extend to the first bending region and are then bent toward the second tab group; and
one of the tabs of the second tab group is a second tab; at least one tab is provided between the second tab and the first tab; a joint of the first segment and the second segment of the second tab is located at the second bending region; the other tabs of the second tab group all extend to the joint of the first segment and the second segment of the second tab and are then bent toward the first tab group; and the second segments of the first tab group and the second segments of the second tab group are connected in a stacking manner in the first direction of the battery cell.

3. The battery cell according to claim 2, wherein two adjacent tabs of the tab structure at least partially overlap in the second direction of the battery cell; and
along the second direction of the battery cell, the tab structure comprises a middle tab, the middle tab and multiple tabs located on one side of the middle tab in the second direction form the first tab group, and multiple tabs located on another side of the middle tab in the second direction form the second tab group.

4. The battery cell according to claim 3, wherein
in the second direction of the battery cell, a tab of the first tab group farthest from the middle tab forms the first tab; and/or
in the second direction of the battery cell, a tab of the second tab group farthest from the middle tab forms the second tab.

5. The battery cell according to claim 2, wherein
in the first direction, the second segments of the second tab group are connected to the second segments of the first tab group in a stacking manner on a side away from the body portion; or
all the second segments of the second tab group are inserted between the second segments of two adjacent tabs of the first tab group; or
all the second segments of the first tab group are inserted between the second segments of two adjacent tabs of the second tab group; or
one second segment of the first tab group is inserted between the second segments of two adjacent tabs of the second tab group.

6. The battery cell according to claim 2, wherein a length of the body portion in the second direction of the battery cell is A, a joint of the second segment and the first segment of the tab has a first boundary, and an end portion of the second segment away from the first segment has a second boundary;
in the second direction, the second boundaries of all the tabs of the first tab group are spaced apart from the first boundaries of the tabs of the second tab group, with a spacing of L1, wherein L1 satisfies: 0.1 mm ≤ L1 ≤ A/2; and
in the second direction, the second boundaries of all the tabs of the second tab group are spaced apart from the first boundaries of the tabs of the first tab group, with a spacing of L2, wherein L2 satisfies: 0.1 mm ≤ L2 ≤ A/2.

7. The battery cell according to claim 6, wherein
in the second direction, a spacing between the second boundaries of two adjacent tabs of the first tab group is x1, wherein x1 satisfies: 0 mm ≤ x1 ≤ 0.5 mm; and/or
in the second direction, a spacing between the second boundaries of two adjacent tabs of the second tab group is x2, wherein x2 satisfies: 0 mm ≤ x2 ≤ 0.5 mm.

8. The battery cell according to claim 2, wherein the second segment of the first tab group has a first connection region, the second segment of the second tab group has a second connection region, and the second connection region is stacked with the first connection region in the first direction of the battery cell; and the battery cell further comprises a solder layer, wherein the solder layer covers the first connection region and the second connection region to electrically connect the first tab group and the second tab group.

9. The battery cell according to claim 3, wherein the tab has an inner surface, the tab is bent toward a side where the inner surface is located, the inner surface of the tab comprises a first surface, a part of the surface of the first segment forms the first surface, and the first surface is connected to the body portion; and
an included angle between the first surface of the middle tab and the second direction of the battery cell is β, wherein β satisfies: 5° ≤ β ≤ 45°.

10. The battery cell according to claim 9, wherein the inner surface of the tab comprises a second surface, a part of the surface of the second segment forms the second surface, the inner surface of some of the tabs of the tab structure further comprises a connection transition surface connected between the first surface and the second surface;
the connection transition surface is an arc surface; or
at least a part of the connection transition surface is planar, and an included angle between the planar part of the connection transition surface of the middle tab and the second surface is α, wherein α satisfies: 90° ≤ α ≤ 150°.

11. The battery cell according to claim 1, wherein the number of the tabs of the first tab group is n1, and the number of the tabs of the second tab group is n2, wherein n1:n2 = 1:(1-5).

12. The battery cell according to claim 11, wherein n1 and n2 satisfy: $n 1 : n 2 = 1 : \left(1-1.2\right) .$

13. The battery cell according to claim 1, wherein the battery cell comprises two groups of tab structures, wherein one group of the tab structures is a positive electrode tab structure, and the other group of the tab structures is a negative electrode tab structure, and the positive electrode tab structure and the negative electrode tab structure are arranged on a same side of the body portion.

14. A battery, comprising:
a housing; and
the battery cell according to any one of claims 1 to 13, wherein the battery cell is arranged in an internal space of the housing.
